# EUROPEAN PATENT APPLICATION

(11) **EP 3 597 543 A2**
(43) Date of publication of application: **22.01.2020**
(21) Application number: 18767434.6
(22) Date of filing: 23.03.2018
(51) Int. Cl.: B64D 33/04, F02K 1/58

(54) **DEFLECTING CASCADE OF A THRUST REVERSER OF AN ENGINE NACELLE**

(30) Priority: 16.03.2017 RU 2017108680
(71) Applicant: Joint-Stock Company "United Engine Corporation" (JSC "EUC"), Moscow 105118 (RU)
(72) Inventor: VEDERNIKOV, Aleksandr Pavlovich, Perm' 614022 (RU); GRINEV, Mikhail Anatol'evich, Perm' 614083 (RU); KOPYSOV, Dmitrij Vladislavovich, Perm' 614007 (RU); BEKURIN, Dmitrij Borisovich, Perm' 614083 (RU); PASHKOVA, Mariya Yur'evna, Perm' 614010 (RU); UMPELOVA, Ol'ga Aleksandrovna, Perm' 614022 (RU)
(74) Representative: Koudine, Andreï
(86) International application number: PCT/RU2018/000187
(87) International publication number: WO 2018/169454

(57) **Abstract**

The invention relates to aeronautical engineering, and specifically to the construction of aviation engines and aeroplane braking devices, and can be used in a cascade-type thrust reverser rotating cascade made of polymer composite materials. A thrust reverser rotating cascade of an outer body of an engine includes monolithic sections. Each section is made of a polymer composite material and includes longitudinal ribs and transverse rotating vanes. The sections are attached using a front flange to a front bulkhead of a load-bearing frame of the thrust reverser by means of a detachable connection, and using a rear flange to a rear bulkhead of the load-bearing frame of the thrust reverser by means of a detachable connection. The longitudinal ribs and transverse rotating vanes in each section are 1.5-10 mm thick. The longitudinal ribs are capable of directing the outflow of the reversing jets at an angle β = 0° - 40° to the radial direction. The transverse rotating vanes are disposed at an angle γ = 40° - 80° to the longitudinal axis of the engine. The technical result of the claimed invention is to create a high-tech design for a thrust reverser rotating cascade, to improve the operational reliability of the thrust reverser and to simplify assembly/disassembly of the thrust reverser rotating cascade. 5 figs.

## Description

The invention relates to the field of aeronautical engineering, in particular to the construction of aviation engines and aeroplane braking devices, and can be used in a cascade-type thrust reverser rotating cascade made of polymer composite materials (PCM).

From the prior art, the various designs of rotating cascades are known, which comprise aerodynamic rotating elements representing a composite structure (patents RU 2145672, F02K1/78, publ. on 20.02.2000; RU 2363580, B29C70/08, publ. on 10.08.2009; US 2012/0036716, B21D53/78, publ. on 16.02.2012; US 4852805, B29C45/14, publ. on 01.08.1989, US 2001/0009642, F01D1/02, publ. on 26.07.2001).

The disadvantages of the design of such devices is the need for additional operations on assembling cascades, the presence of additional fasteners.

The closest to the proposed invention by the technical essence and the technical result achieved is a thrust reverser rotating cascade of an outer body of an engine, consisting of sections of polymer composite materials, including intersecting longitudinal and transverse layers of edges and vanes of a cascade section of various sections, from rectangular one for carrier end vanes to c-shaped and curved ones, wound as continuous harness of unidirectional, for example, carbon filaments impregnated with a polymer binder, with varying degrees of curvature, drop-shaped for aerodynamic vanes and ribs, having a construction height commensurate with the distance between the vanes, an undercut of the cascade cells, also commensurate with the size of the cells, each layer of each vane and rib being configured with the number of harnesses proportional to the thickness of a rib or a vane at the level of this layer (patent of RF No. 2509649, B29C70/08, publ. on 20.03.2014 - prototype).

The disadvantage of the design of the prototype is the need for partial disassembly of the thrust reverser for assembly/disassembly of the sections of the rotating cascade.

The technical result of the claimed invention is to create a high-tech design for a thrust reverser rotating cascade, to improve the operational reliability of the thrust reverser and to simplify assembly/disassembly of the thrust reverser rotating cascade.

The technical result is achieved due to the fact that in the rotating cascade of the thrust reverser of the outer engine body, made of polymer composite material, including monolithic sections, each of which comprises longitudinal ribs and transverse rotating vanes, according to the invention, the sections are attached using a front flange to a front bulkhead of load-bearing frame of the thrust reverser by means of a detachable connection, and using a rear flange to a rear bulkhead of the load-bearing frame of the thrust reverser by means of a detachable connection, wherein the longitudinal ribs and transverse rotating vanes in each section are 1.5-10 mm thick, the longitudinal ribs being configured to direct the outflow of the reversing jets at an angle β = 0° - 40° to the radial direction, and the transverse rotating vanes being disposed at an angle γ = 40° - 80° to the longitudinal axis of the engine.

Attaching the sections in an appropriate way to the load-bearing frame of the thrust reverser allows to simplify the assembly/disassembly of the sections of the rotating cascade on/from the thrust reverser.

Making longitudinal ribs and transverse rotating vanes in each section of 1.5-10 mm thick, making longitudinal ribs capable to ensure the direction of the outflow of the reversing jets at an angle of β = 0° - 40° to the radial direction, as well as locating transverse rotating vanes at an angle γ = 40° - 80° to the longitudinal axis of the engine allows to provide for a specified value of reverse thrust, prevent the direct impact of the reversing jets on the elements of the aircraft and the ingress of reversing jets reflected from the runway into the inlet of the engine, which increases the reliability of the thrust reverser.

The invention essence is illustrated by the following drawings.

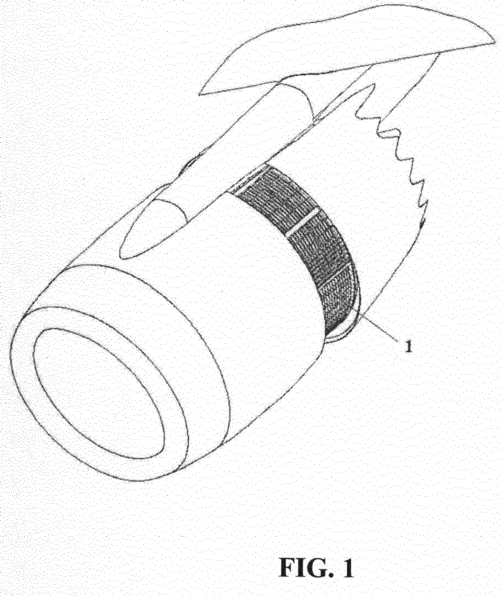

FIG. 1 shows a general view of a thrust reverser rotating cascade consisting of sections.

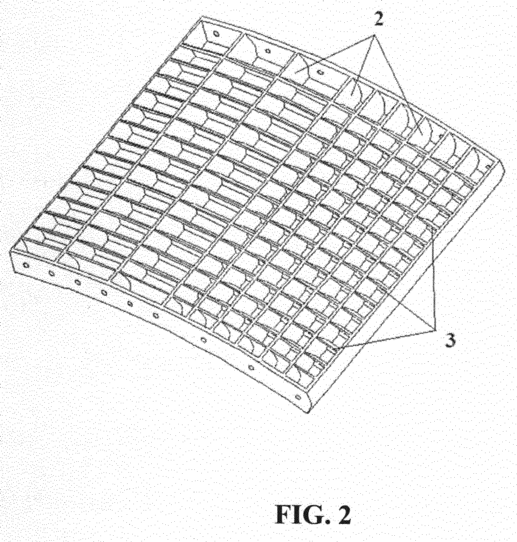

FIG. 2 shows a view of the monolithic section of the rotating cascade, including longitudinal ribs and transverse rotating vanes.

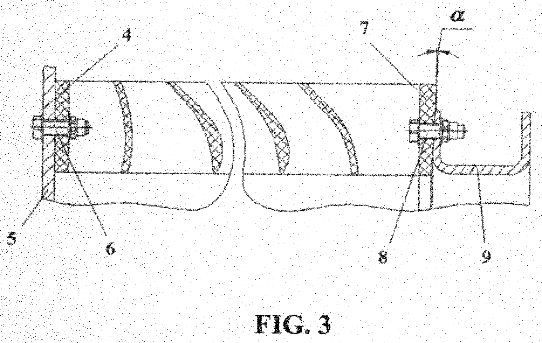

FIG. 3 shows attachment of a rotating cascade section in the thrust reverser.

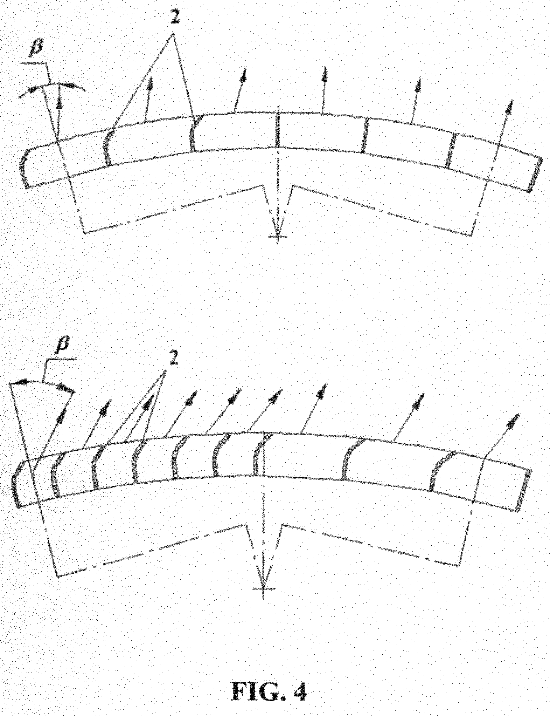

FIG. 4 shows a cross section of the longitudinal ribs.

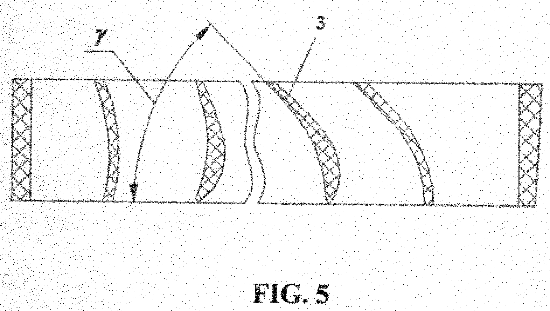

FIG. 5 shows a cross section of the rotating vanes.

A (cascade-type) thrust reverser rotating cascade of an outer body of an engine consists of several sections 1, wherein each of the sections 1 is a mesh design made of longitudinal ribs 2 and transverse rotating vanes 3 and is a monolithic structure made of polymer composite material. Each of the sections 1 is made of PCM within one technological operation of molding.

The rotating cascade sections 1 are attached using a front flange 4 to a front bulkhead 6 of a fixed load-bearing frame of the thrust reverser by means of a detachable connection 5 and using a rear flange 7 are attached to a rear bulkhead 9 of a fixed load-bearing frame of the thrust reverser by means of a detachable connection 8. One of the fastenings of the rear flange 7 to the rear bulkhead 9 is tapered with an angle α = 1° - 90° to the forming one.

The longitudinal ribs (elements) 2 of each section 1 are 1.5 -10 mm thick and can be configured in different shapes within the specified thickness for each rib 2 with an input edge radius of at least 0.6 mm and an angle of inclination of the output edge of 0° to 60° and circumferential pitch of 2° to 8° between the adjacent ribs 2. Longitudinal ribs 2 in the section 1 are configured and positioned such that they provide for directing the outflow of the reversing jets at an angle β = 0° - 40° to the radial direction.

The transverse rotating vanes 3 of each section 1 are 1.5-10 mm thick and can be configured in different shapes within the specified thickness for each vane 3 with an input edge radius of at least 0.6 mm. The vanes 3 are located at an angle of inclination γ = 40° - 80° to the longitudinal axis of the engine. The distance between the vanes 3 is commensurate to the height of the vanes 3.

The thrust reverse rotating cascade functions as follows.

To reduce the landing ground run of a jet plane when landing, a thrust reverser is used in the design of a jet engine. The cascade-type thrust reverser is located in the outer contour of the engine and usually consists of a moving part and a fixed load-bearing frame. When the thrust reverser is turned on, the moving part is shifted, while simultaneously blocking a flow of the outer contour and opening the rotating cascades, which provide for the formation of a reversing jet. Longitudinal ribs 2 and transverse rotating vanes 3 provide for the angles of outflow the reversing jets necessary to achieve a predetermined value of reverse thrust, flow-around of the elements of the airplane fuselage, preventing the ingress of a jet reflected from the runway into the inlet of the engine.

## Claims

1. thrust reverser rotating cascade of an outer body of an engine, made of polymer composite material, including monolithic sections, each of which comprises longitudinal ribs and transverse rotating vanes, **characterised in that** the sections are attached using a front flange to a front bulkhead of a load-bearing frame of the thrust reverser by means of a detachable connection, and using a rear flange to a rear bulkhead of the load-bearing frame of the thrust reverser by means of a detachable connection, **in that** the longitudinal ribs and transverse rotating vanes in each section are 1.5-10 mm thick, and the longitudinal ribs are capable of directing the outflow of the reversing jets at an angle β = 0° - 40° to the radial direction, and the transverse rotating vanes are disposed at an angle γ = 40° - 80° to the longitudinal axis of the engine.
